(19) Europäisches Patentamt
European Patent Office
Office européen des brevets

(11) Veröffentlichungsnummer: **0 241 787 A1**

# (12) EUROPÄISCHE PATENTANMELDUNG

(21) Anmeldenummer: **87104553.0**

(51) Int. Cl.[4]: **C07C 131/00 , A01N 37/22**

(22) Anmeldetag: **27.03.87**

(30) Priorität: **05.04.86 DE 3611418**

(43) Veröffentlichungstag der Anmeldung: **21.10.87 Patentblatt 87/43**

(84) Benannte Vertragsstaaten: **BE CH DE ES FR GB IT LI NL**

(71) Anmelder: **BASF Aktiengesellschaft**
**Carl-Bosch-Strasse 38**
**D-6700 Ludwigshafen(DE)**

(72) Erfinder: **Keil, Michael, Dr.**
**Fontanestrasse 4**
**D-6713 Freinsheim(DE)**
Erfinder: **Schirmer, Ulrich, Dr.**
**Berhalde 79**
**D-6900 Heidelberg(DE)**
Erfinder: **Kolassa, Dieter, Dr.**
**Moltkestrasse 8**
**D-6700 Ludwigshafen(DE)**
Erfinder: **Wuerzer, Bruno, Dr.**
**Ruedigerstrasse 13**
**D-6701 Otterstadt(DE)**
Erfinder: **Meyer, Norbert, Dr.**
**Dossenheimer Weg 22**
**D-6802 Ladenburg(DE)**

## (54) 2,5-Substituierte-Dihydroresorcinenoletherderivate.

(57) 2,5-Substituierte Dihydroresorcinenoletherderivate der allgemeinen Formel I

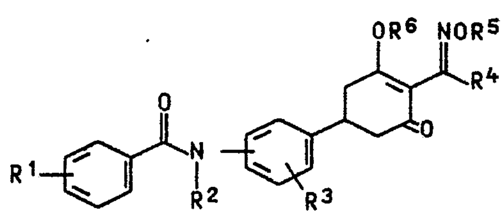

(I)

in der die Substituenten folgende Bedeutung haben:

$R^1$ Wasserstoff, $C_1$-$C_4$-Alkyl, $C_1$-$C_4$-Alkoxy, $C_1$-$C_4$-Halogenalkyl, Halogen oder Nitro,

$R^2$ Wasserstoff, $C_1$-$C_4$-Alkyl oder $C_2$-$C_4$-Alkenyl,

$R^3$ Wasserstoff, $C_1$-$C_4$-Alkyl, $C_1$-$C_4$-Alkoxy, $C_1$-$C_4$-Alkylthio, $C_2$-$C_4$-Alkenyl, $C_2$-$C_4$-Alkenyloxy, $C_2$-$C_4$-Alkinyl, $C_2$-$C_4$-Alkinyloxy, Halogen, $C_1$-$C_4$-Halogenalkyl, Hydroxy, Nitro oder Amino,

$R^4$ $C_1$-$C_4$-Alkyl,

$R^5$ $C_1$-$C_4$-Alkyl, $C_1$-$C_4$-Halogenalkyl, $C_2$-$C_4$-Alkenyl oder $C_2$-$C_4$-Halogenalkenyl,

$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituierten Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl,

sowie deren Herstellung und Verwendung als Herbizide.

EP 0 241 787 A1

## 2,5-Substituierte Dihydroresorcinenoletherderivate

Die vorliegende Erfindung betrifft neue 2,5-substituierte Dihydroresorcinenoletherderivate der allgemeinen Formel I

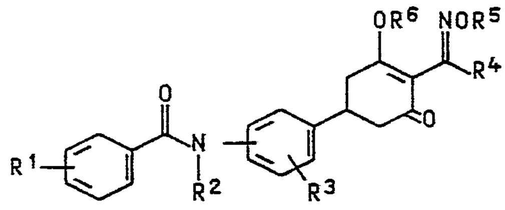

(I)

In dieser Formel bedeuten:

$R^1$ Wasserstoff, $C_1$-$C_4$-Alkyl, $C_1$-$C_4$-Alkoxy, $C_1$-$C_4$-Halogenalkyl, Halogen oder Nitro,
$R^2$ Wasserstoff, $C_1$-$C_4$-Alkyl oder $C_2$-$C_4$-Alkenyl,
$R^3$ Wasserstoff, $C_1$-$C_4$-Alkyl, $C_1$-$C_4$-Alkoxy, $C_1$-$C_4$-Alkylthio, $C_2$-$C_4$-Alkenyl, $C_2$-$C_4$-Alkenyloxy, $C_2$-$C_4$-Alkinyl, $C_2$-$C_4$-Alkinyloxy, Halogen, $C_1$-$C_4$-Halogenalkyl, Hydroxy, Nitro oder Amino,
$R^4$ $C_1$-$C_4$-Alkyl,
$R^5$ $C_1$-$C_4$-Alkyl, $C_1$-$C_4$-Halogenalkyl, $C_2$-$C_4$-Alkenyl oder $C_2$-$C_4$-Halogenalkenyl,
$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituierten Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl.

Außerdem betrifft die Erfindung die Herstellung der Verbindungen I, deren Verwendung als Herbizide, sowie Verbindung I enthaltende Mischungen zur Bekämpfung unerwünschten Pflanzenwachstums.

Aus der DE-OS 34 33 767 und DE-OS 33 36 354 sind ähnliche Cyclohexenonderivate des Typs II bekannt, die sich von den Verbindungen I dadurch unterscheiden, daß sie anstelle des Restes -$OR^6$ eine freie Hydroxylgruppe tragen.

Diese als Herbizide empfohlenen Verbindungen haben jedoch insbesondere bei starker Sonneneinstrahlung nicht immer eine ausreichend gute Wirkung gegen Ungräser.

Der Erfindung lag daher die Aufgabe zugrunde, photolytisch stabilere und wirksamere Herbizide aufzufinden.

Demgemäß wurden die eingangs definierten neuen 2,5-substituierten Dihydroresorcinenoletherderivate I gefunden. Weiterhin wurde gefunden, daß sich die Verbindungen I hervorragend als Herbizide eignen.

Außerdem wurden Verfahren zur Herstellung der Verbindungen I gemäß Patentanspruch 2 gefunden.

Charakteristisch für die allgemeine herbizide Wirkung ist der Dihydroresorcinenolether-oximetherteil

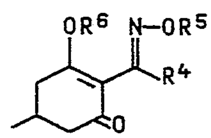

Im Hinblick auf die photolytische Stabilität, die Wirkungsverstärkung und die selektive Wirkung der Herbizide übt der Rest $R^6$ einen günstigen Einfluß aus.

Die Verbindungen des Typs I sind nach folgenden Methoden erhältlich.

2,5-Substituierte Dihydroresorcinenolderivate II

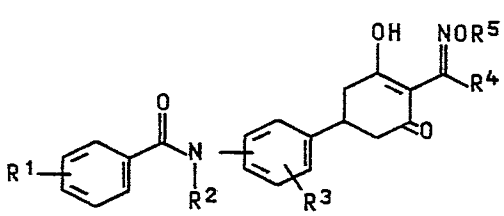

(II)

setzt man mit Halogeniden $R^6$-Hal in Gegenwart einer Base in an sich bekannter Weise, gegebenenfalls in einem inerten Lösungsmittel, in einer Ein-oder Zweiphasenreaktion um. Als Halogenide verwendet man beispielsweise Chloride oder Bromide und führt die Reaktion in einem Temperaturintervall von -5°C bis zum Siedepunkt der jeweiligen Reaktionsmischung durch. Geeignete Basen sind beispielsweise Carbonate, Hydrogencarbonate, Acetate, Alkoholate, Hydroxide oder Oxide von Alkali-oder Erdalkalimetallen, insbesondere von Natrium, Kalium, Magnesium oder Calcium. Außerdem können auch organische Basen, wie Pyridin oder tertiäre Amine, Verwendung finden.

Als Lösungsmittel eignen sich Kohlenwasserstoffe wie Hexan, Cyclohexan, Benzol und Toluol, chlorierte Kohlenwasserstoffe wie Chloroform, Dichlormethan und Dichlorethan, Ketone wie Aceton und Butanon, Ester wie Essigsäureethylester oder Ether wie Diethylether, Dioxan und Tetrahydrofuran sowie Dimethylsulfoxid und Dimethylformamid.

Zur Reaktionsbeschleunigung im Einphasensystem verwendet man Azolverbindungen, beispielsweise Imidazol, Pyrazol oder Pyridin und dessen Derivate wie 4-Piperidinopyridin oder 4-Dimethylaminopyridin. Im Zweiphasensystem eignen sich als Reaktionsbeschleuniger Ammonium-oder Phosphoniumsalze.

Als Ausgangsprodukte zur Synthese der erfindungsgemäßen Verbindungen I können auch die Enolate wie das Na-Enolat der Verbindungen II dienen. Die Umsetzung erfolgt dann in oben angegebener Weise ohne Zusatz von Basen.

In den Verbindungen I stehen die Reste für folgende Substituenten:

$R^1$ - für Wasserstoff, $C_1$-$C_4$-Alkyl, $C_1$-$C_4$-Alkoxy, $C_1$-$C_4$-Halogenalkylen, Halogen und Nitro, bevorzugt für Wasserstoff, $C_1$-$C_3$-Alkyl, Methoxy, Trifluormethyl, Fluor, Chlor und Nitro, besonders bevorzugt für Wasserstoff,

$R^2$ - für Wasserstoff, $C_1$-$C_4$-Alkyl und $C_2$-$C_4$-Alkenyl, bevorzugt für Wasserstoff, $C_1$-$C_3$-Alkyl und Allyl, besonders bevorzugt für Wasserstoff und $C_1$-$C_2$-Alkyl und ganz besonders bevorzugt für Wasserstoff,

$R^3$ - für Wasserstoff, $C_1$-$C_4$-Alkyl, $C_1$-$C_4$-Alkoxy, $C_1$-$C_4$-Alkylthio, $C_2$-$C_4$-Alkenyl, $C_2$-$C_4$-Alkenyloxy, $C_2$-$C_4$-Alkinyl, $C_2$-$C_4$-Alkinyloxy, Halogen, $C_1$-$C_4$-Halogenalkyl, Hydroxy, Nitro und Amino, bevorzugt für Wasserstoff, $C_1$-$C_2$-Alkyl, $C_1$-$C_2$-Alkoxy, $C_3$-$C_4$-Alkenyl, Fluor, Chlor, Trifluormethyl, Hydroxy, Nitro und Amino, besonders bevorzugt für Wasserstoff, Methyl, Methoxy, Fluor, Chlor und Hydroxy und ganz besonders bevorzugt für Wasserstoff,

$R^4$ - für $C_1$-$C_4$-Alkyl, bevorzugt für Ethyl und Propyl, besonders bevorzugt für Ethyl und n-Propyl und ganz besonders bevorzugt für n-Propyl,

$R^5$ - für $C_1$-$C_4$-Alkyl, $C_1$-$C_4$-Halogenalkyl, $C_2$-$C_4$-Alkenyl und $C_2$-$C_4$-Halogenalkenyl, bevorzugt für $C_1$-$C_3$-Alkyl, $C_3$-$C_4$-Alkenyl, 2-Fluorethyl, 2-Chlorethyl und 3-Chlorprop-2-en-1-yl, besonders bevorzugt für Ethyl, But-2-en-1-yl und 3-Chlorprop-2-en-1-yl und ganz besonders bevorzugt für Ethyl,

$R^6$ - für $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituiertem Rest, $C_2$-$C_8$-Alkoxycarbonyl, $C_2$-$C_8$-Alkylthio carbonyl, $C_1$-$C_8$-Alkylsulfonyl und $C_2$-$C_8$-Dialkoxyphosphoryl, bevorzugt für Methyl, Ethyl, Propyl, Butyl, Hexyl und Octyl, Formyl, Acetyl, Propionyl, Butyryl, Valeryl, Pivaloyl, Lauroyl, Palmitoyl, Stearoyl, Methacryloyl, Crotonoyl, Oleoyl, Methoxyacetyl, Ethoxyacetyl, Chloracetyl, Trifluoracetyl, Cyclopropylcarbonyl, Cyclopentylcarbonyl, Cyclohexylcarbonyl, Benzoyl, 2-Chlorbenzoyl, 2-Fluorbenzoyl und 4-Methoxybenzoyl, Methoxycarbonyl, Ethoxycarbonyl und Propoxycarbonyl, Methylthiocarbonyl und Ethylthiocarbonyl, Methyl-, Ethyl-, Propyl-, Butyl-, Hexyl-und Octylsulfonyl, Dimethoxy-, Diethoxy-, Methoxy-ethoxy-und Dipropoxyphosphoryl, besonders bevorzugt für Acetyl, Propionyl, Butyryl, Valeroyl, Pivaloyl, Hexanoyl, Stearoyl, Plamitoyl, Oleoyl, Methoxyacetyl, Methoxythioacetyl, Chloracetyl, Bromacetyl, Cyclopropylcarbonyl, Cyclohexylcarbonyl, Benzoyl, 2-Methylbenzoyl, 4-Chlorbenzoyl, 3-Methoxybenzoyl, 4-Nitrobenzoyl, Methoxycarbonyl, Methylthiocarbonyl, Methylsulfonyl, Ethylsulfonyl, Diethoxyphosphoryl, Methyl, Ethyl, n-Octyl, Allyl, 2-Methylpropanoyl, 2,2-Dimethylpropanoyl, 2-und 4-Methylpentanoyl, 3-Chlorpropanoyl, Dichloracetyl, Trichloracetyl, 2,2-Dichlorpropanoyl, Crotonoyl und 3-Methylcrotonyl, ganz besonders bevorzugt für Acetyl, Propionyl und Butyryl.

Grundsätzlich kann der Benzamidosubstituent und $R^3$ in beliebiger Stellung am Phenylring stehen, bevorzugt steht der Benzamidorest in para-oder auch in meta-Stellung zum Dihydroresorcinrest. Der Rest $R^3$ steht bevorzugt in ortho-und meta-Stellung sowie in para-Stellung, wenn der Benzamidorest in meta-Stellung steht.

Beispiele für geeignete Verbindungen I sind solche mit folgenden Grundstrukturen:

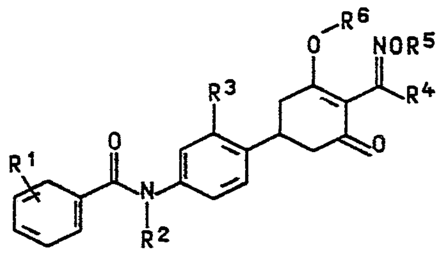

(Ia)

| Verb. Nr. | $R^1$ | $R^2$ | $R^3$ | $R^4$ | $R^5$ | $R^6$ |
|---|---|---|---|---|---|---|
| 1 | H | H | H | $n-C_3H_7$ | $C_2H_5$ | Acetyl |
| 2 | H | H | H | $C_2H_5$ | $C_2H_5$ | Acetyl |
| 3 | H | H | H | $n-C_3H_7$ | $C_2H_5$ | Propionyl |
| 4 | H | H | H | $C_2H_5$ | $C_2H_5$ | Propionyl |
| 5 | H | H | H | $n-C_3H_7$ | $C_2H_5$ | Butyryl |
| 6 | H | H | H | $C_2H_5$ | $C_2H_5$ | Butyryl |
| 7 | H | H | H | $n-C_3H_7$ | $C_2H_5$ | Valeroyl |
| 8 | H | H | H | $C_2H_5$ | $C_2H_5$ | Valeroyl |
| 9 | H | H | H | $n-C_3H_7$ | $C_2H_5$ | Pivaloyl |
| 10 | H | H | H | $C_2H_5$ | $C_2H_5$ | Pivaloyl |
| 11 | H | H | H | $n-C_3H_7$ | $C_2H_5$ | Hexanoyl |
| 12 | H | H | H | $C_2H_5$ | $C_2H_5$ | Hexanoyl |
| 13 | H | H | H | $n-C_3H_7$ | $C_2H_5$ | Stearoyl |
| 14 | H | H | H | $C_2H_5$ | $C_2H_5$ | Stearoyl |
| 15 | H | H | H | $n-C_3H_7$ | $C_2H_5$ | Palmitoyl |
| 16 | H | H | H | $C_2H_5$ | $C_2H_5$ | Palmitoyl |
| 17 | H | H | H | $n-C_3H_7$ | $C_2H_5$ | Oleoyl |
| 18 | H | H | H | $C_2H_5$ | $C_2H_5$ | Oleoyl |
| 19 | H | H | H | $n-C_3H_7$ | $C_2H_5$ | Methoxyacetyl |
| 20 | H | H | H | $C_2H_5$ | $C_2H_5$ | Methoxyacetyl |
| 21 | H | H | H | $n-C_3H_7$ | $C_2H_5$ | Methylthioacetyl |
| 22 | H | H | H | $C_2H_5$ | $C_2H_5$ | Methylthioacetyl |
| 23 | H | H | H | $n-C_3H_7$ | $C_2H_5$ | Chloracetyl |
| 24 | H | H | H | $C_2H_5$ | $C_2H_5$ | Chloracetyl |
| 25 | H | H | H | $n-C_3H_7$ | $C_2H_5$ | Bromacetyl |
| 26 | H | H | H | $C_2H_5$ | $C_2H_5$ | Bromacetyl |
| 27 | H | H | H | $n-C_3H_7$ | $C_2H_5$ | Cyclopropylcarbonyl |
| 28 | H | H | H | $C_2H_5$ | $C_2H_5$ | Cyclopropylcarbonyl |

| Verb. Nr. | $R^1$ | $R^2$ | $R^3$ | $R^4$ | $R^5$ | $R^6$ |
|---|---|---|---|---|---|---|
| 29 | H | H | H | $n-C_3H_7$ | $C_2H_5$ | Cyclohexylcarbonyl |
| 30 | H | H | H | $C_2H_5$ | $C_2H_5$ | Cyclohexylcarbonyl |
| 31 | H | H | H | $n-C_3H_7$ | $C_2H_5$ | Benzoyl |
| 32 | H | H | H | $C_2H_5$ | $C_2H_5$ | Benzoyl |
| 33 | H | H | H | $n-C_3H_7$ | $C_2H_5$ | 2-Methylbenzoyl |
| 34 | H | H | H | $C_2H_5$ | $C_2H_5$ | 2-Methylbenzoyl |
| 35 | H | H | H | $n-C_3H_7$ | $C_2H_5$ | 4-Chlorbenzoyl |
| 36 | H | H | H | $C_2H_5$ | $C_2H_5$ | 4-Chlorbenzoyl |
| 37 | H | H | H | $n-C_3H_7$ | $C_2H_5$ | 3-Methoxybenzoyl |
| 38 | H | H | H | $C_2H_5$ | $C_2H_5$ | 3-Methoxybenzoyl |
| 39 | H | H | H | $n-C_3H_7$ | $C_2H_5$ | 4-Nitrobenzoyl |
| 40 | H | H | H | $C_2H_5$ | $C_2H_5$ | 4-Nitrobenzoyl |
| 41 | H | H | H | $n-C_3H_7$ | $C_2H_5$ | Methoxycarbonyl |
| 42 | H | H | H | $C_2H_5$ | $C_2H_5$ | Methoxycarbonyl |
| 43 | H | H | H | $n-C_3H_7$ | $C_2H_5$ | Methylthiocarbonyl |
| 44 | H | H | H | $C_2H_5$ | $C_2H_5$ | Methylthiocarbonyl |
| 45 | H | H | H | $n-C_3H_7$ | $C_2H_5$ | Methylsulfonyl |
| 46 | H | H | H | $C_2H_5$ | $C_2H_5$ | Methylsulfonyl |
| 47 | H | H | H | $n-C_3H_7$ | $C_2H_5$ | Diethoxyphosphoryl |
| 48 | H | H | H | $C_2H_5$ | $C_2H_5$ | Diethoxyphosphoryl |
| 49 | H | H | H | $n-C_3H_7$ | (E)-$CH_2$-CH=CH-Cl | Butyryl |
| 50 | H | H | H | $C_2H_5$ | (E)-$CH_2$-CH=CH-Cl | Butyryl |
| 51 | H | H | H | $n-C_3H_7$ | (E)-$CH_2$-CH=CH-$CH_3$ | Butyryl |
| 52 | H | H | H | $C_2H_5$ | (E)-$CH_2$-CH=CH-$CH_3$ | Butyryl |
| 53 | H | $CH_3$ | H | $n-C_3H_7$ | $C_2H_5$ | Acetyl |
| 54 | H | $CH_3$ | H | $C_2H_5$ | $C_2H_5$ | Acetyl |
| 55 | H | $CH_3$ | H | $n-C_3H_7$ | $C_2H_5$ | Butyryl |
| 56 | H | $CH_3$ | H | $C_2H_5$ | $C_2H_5$ | Butyryl |
| 57 | H | $C_2H_5$ | H | $n-C_3H_7$ | $C_2H_5$ | Acetyl |
| 58 | H | $C_2H_5$ | H | $C_2H_5$ | $C_2H_5$ | Acetyl |
| 59 | H | $C_2H_5$ | H | $n-C_3H_7$ | $C_2H_5$ | Butyryl |
| 60 | H | $C_2H_5$ | H | $C_2H_5$ | $C_2H_5$ | Butyryl |
| 61 | 2-$CH_3$ | H | H | $n-C_3H_7$ | $C_2H_5$ | Butyryl |
| 62 | 2-$CH_3$ | H | H | $C_2H_5$ | $C_2H_5$ | Butyryl |
| 63 | 2-$CH_3O$ | H | H | $n-C_3H_7$ | $C_2H_5$ | Benzoyl |
| 64 | 4-F | H | H | $n-C_3H_7$ | $C_2H_5$ | Methoxycarbonyl |
| 65 | 3-$NO_2$ | H | H | $n-C_3H_7$ | $C_2H_5$ | Diethoxyphosphoryl |
| 66 | 2-$CF_3$ | H | H | $n-C_3H_7$ | $C_2H_5$ | Palmitoyl |
| 67 | H | H | F | $n-C_3H_7$ | $C_2H_5$ | Acetyl |
| 68 | H | H | F | $n-C_3H_7$ | $C_2H_5$ | Butyryl |
| 69 | H | H | $CF_3$ | $n-C_3H_7$ | $C_2H_5$ | Benzoyl |

| Verb. Nr. | $R^1$ | $R^2$ | $R^3$ | $R^4$ | $R^5$ | $R^6$ |
|---|---|---|---|---|---|---|
| 70 | H | H | $CF_3$ | n-$C_3H_7$ | $C_2H_5$ | Oleoyl |
| 109 | H | $CH_3$ | H | n-$C_3H_7$ | $C_2H_5$ | Methyl |
| 110 | H | H | H | n-$C_3H_7$ | $C_2H_5$ | Methyl |
| 111 | H | H | H | n-$C_3H_7$ | $C_2H_5$ | 2-Methylpropanoyl |
| 112 | H | H | H | n-$C_3H_7$ | $C_2H_5$ | 2,2-Dimethylpropanoyl |
| 113 | H | H | H | n-$C_3H_7$ | $C_2H_5$ | 2-Methylpentanoyl |
| 114 | H | H | H | n-$C_3H_7$ | $C_2H_5$ | 4-Methyl-pentanoyl |
| 115 | H | H | H | n-$C_3H_7$ | $C_2H_5$ | 3-Chlorpropanoyl |
| 116 | H | H | H | n-$C_3H_7$ | $C_2H_5$ | Dichloracetyl |
| 117 | H | H | H | n-$C_3H_7$ | $C_2H_5$ | Trichloracetyl |
| 118 | H | H | H | n-$C_3H_7$ | $C_2H_5$ | 2,2-Dichlor-propanoyl |
| 119 | H | H | H | n-$C_3H_7$ | $C_2H_5$ | Crotonoyl |
| 120 | H | H | H | n-$C_3H_7$ | $C_2H_5$ | 3-Methylcrotonoyl |

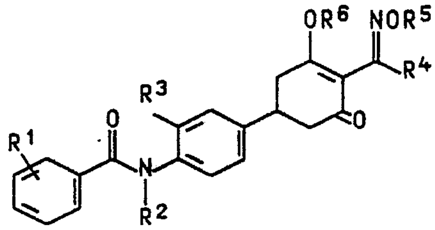

(Ib)

| Verb. Nr. | $R^1$ | $R^2$ | $R^3$ | $R^4$ | $R^5$ | $R^6$ |
|---|---|---|---|---|---|---|
| 71 | H | H | F | $n-C_3H_7$ | $C_2H_5$ | Acetyl |
| 72 | H | H | F | $C_2H_5$ | $(E)-CH_2-CH=CH-Cl$ | Acetyl |
| 73 | H | H | F | $n-C_3H_7$ | $(E)-CH_2-CH=CH-Cl$ | Butyryl |
| 74 | H | H | F | $C_2H_5$ | $(E)-CH_2-CH=CH-CH_3$ | Butyryl |
| 75 | H | H | F | $n-C_3H_7$ | $(E)-CH_2-CH=CH-CH_3$ | Butyryl |
| 76 | H | H | F | $C_2H_5$ | $C_2H_5$ | Acetyl |
| 77 | H | H | F | $n-C_3H_7$ | $C_2H_5$ | Palmitoyl |
| 78 | H | H | F | $C_2H_5$ | $C_2H_5$ | Palmitoyl |
| 79 | H | H | F | $n-C_3H_7$ | $C_2H_5$ | Methoxycarbonyl |
| 80 | H | H | F | $n-C_3H_7$ | $C_2H_5$ | Benzoyl |
| 81 | H | H | F | $n-C_3H_7$ | $C_2H_5$ | Cyclopropylcarbonyl |
| 82 | H | H | F | $n-C_3H_7$ | $C_2H_5$ | Diethoxyphosphoryl |
| 83 | H | H | $CH_3$ | $n-C_3H_7$ | $C_2H_5$ | Acetyl |
| 84 | H | H | $CH_3$ | $n-C_3H_7$ | $C_2H_5$ | Butyryl |
| 121 | H | H | F | $n-C_3H_7$ | $C_2H_5$ | Butyryl |
| 122 | H | H | F | $n-C_3H_7$ | $(E)-CH_2-CH=CH-Cl$ | Acetyl |
| 123 | H | H | F | $n-C_3H_7$ | $(E)-CH_2-CH=CH-Cl$ | Propionyl |
| 124 | H | H | F | $n-C_3H_7$ | $(E)-CH_2-CH=CH-Cl$ | Benzoyl |
| 125 | H | H | $CH_3$ | $n-C_3H_7$ | $(E)-CH_2-CH=CH-Cl$ | Butyryl |
| 126 | H | H | $CH_3$ | $n-C_3H_7$ | $(E)-CH_2-CH=CH-Cl$ | Acetyl |
| 127 | H | H | $CH_3$ | $n-C_3H_7$ | $C_2H_5$ | Benzoyl |
| 128 | H | H | $CH_3$ | $n-C_3H_7$ | $(E)-CH_2-CH=CH-Cl$ | Benzoyl |
| 129 | H | H | $CH_3O$ | $n-C_3H_7$ | $C_2H_5$ | Butyryl |

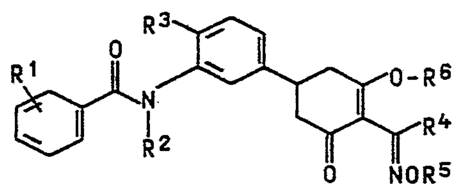

(Ic)

| Verb. Nr. | $R^1$ | $R^2$ | $R^3$ | $R^4$ | $R^5$ | $R^6$ |
|---|---|---|---|---|---|---|
| 85 | H | H | Cl | $n-C_3H_7$ | $C_2H_5$ | Acetyl |
| 86 | H | H | Cl | $n-C_3H_7$ | $C_2H_5$ | Butyryl |
| 87 | H | H | Cl | $n-C_3H_7$ | $C_2H_5$ | Palmitoyl |
| 88 | H | H | Cl | $n-C_3H_7$ | $C_2H_5$ | Benzoyl |
| 89 | H | H | $CH_3$ | $n-C_3H_7$ | $C_2H_5$ | Butyryl |
| 90 | H | H | $CH_3$ | $CH_3$ | $C_2H_5$ | Cyclopropylcarbonyl |
| 91 | H | H | F | $n-C_3H_7$ | $C_2H_5$ | Ethylsulfonyl |
| 92 | H | H | F | $n-C_3H_7$ | $C_2H_5$ | Butyryl |
| 93 | H | H | OH | $n-C_3H_7$ | $C_2H_5$ | Butyryl |
| 94 | H | H | OH | $n-C_3H_7$ | $C_2H_5$ | Palmitoyl |
| 95 | H | H | $CH_3O$ | $n-C_3H_7$ | $C_2H_5$ | Butyryl |
| 96 | H | H | $CH_3O$ | $n-C_3H_7$ | $C_2H_5$ | Palmitoyl |

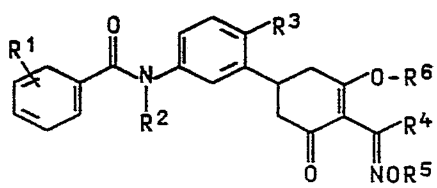

(Id)

| Verb. Nr. | $R^1$ | $R^2$ | $R^3$ | $R^4$ | $R^5$ | $R^6$ |
|---|---|---|---|---|---|---|
| 97 | H | H | F | $n-C_3H_7$ | $C_2H_5$ | Acetyl |
| 98 | H | H | F | $n-C_3H_7$ | $C_2H_5$ | Benzoyl |
| 99 | H | H | F | $n-C_3H_7$ | $C_2H_5$ | Butyryl |
| 100 | H | H | F | $n-C_3H_7$ | $C_2H_5$ | Palmitoyl |
| 101 | H | H | H | $n-C_3H_7$ | $C_2H_5$ | Methyl |
| 102 | H | H | H | $n-C_3H_7$ | $C_2H_5$ | Ethyl |
| 103 | H | H | H | $n-C_3H_7$ | $C_2H_5$ | Allyl |
| 104 | H | H | H | $n-C_3H_7$ | $C_2H_5$ | n-Octyl |
| 105 | H | $CH_3$ | H | $n-C_3H_7$ | $C_2H_5$ | Methyl |
| 106 | H | $CH_3$ | H | $n-C_3H_7$ | $C_2H_5$ | Ethyl |
| 107 | H | $CH_3$ | H | $n-C_3H_7$ | $C_2H_5$ | Allyl |
| 108 | H | $CH_3$ | H | $n-C_3H_7$ | $C_2H_5$ | n-Octyl |

Die 2,5-substituierten Dihydroresorcinenoletherderivate der Formel I bzw. die sie enthaltenden herbiziden Mittel können beispielsweise in Form von direkt versprühbaren Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Chlorbenzol, Isophoron oder stark polare Lösungsmittel, wie N,N-Dimethylformamid, Dimethylsulfoxid, N-Methylpyrrolidon oder Wasser in Betracht.

Wäßrige Anwendungsformen können aus Emulsionskonzentraten, Dispersionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier-oder Emulgiermittel in Wasser homogenisiert werden. Es können aber auch aus wirksamer Substanz Netz-, Haft-, Dispergier-oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali-und Erdalkalisalze der Dibutylnaphthalinsulfonsäure, Laurylethersulfat, Fettalkoholsulfate, fettsaure Alkali-und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol oder Nonylphenol, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxy propylen, Laurylalkoholpolyglykoletheracetat, Sorbitester, Lignin, Sulfitablaugen oder Methylcellulose in Betracht.

Pulver-, Streu-und Stäubemittel können durch Mischen oder gemeinsames Vermahlen der wirksamen Substanzen mit einem festen Trägerstoff hergestellt werden.

Granulate, z.B. Umhüllungs-, Imprägnierungs-und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium-und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz-und Nußschalenmehl, Cellulosepulver oder andere feste Trägerstoffe.

Die Formulierungen enthalten zwischen 0,1 und 95 Gew.%, vorzugsweise zwischen 0,5 und 90 Gew.%, Wirkstoff.

Die Applikation kann im Vorauflauf-oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Es wurde gefunden, daß 2,5-substituierte Dihydroresorcinenoletherderivate der Formel I eine gute herbizide Wirkung vorzugsweise gegen Arten aus der Familie der Gräser (Gramineen) besitzen. Sie sind verträglich und somit selektiv in dikotylen Kulturen sowie in monokotylen Gewächsen, welche nicht zu den Gramineen zählen. Ferner sind Verbindungen darunter, welche sich auch in Gramineenkulturen wie Weizen und Reis selektiv verhalten und gleichzeitig unerwünschte Gräser bekämpfen.

Die Aufwandmengen an Wirkstoff betragen je nach Jahreszeit, Zielpflanzen und Wachstumsstadium 0,01 bis 3,0, vorzugsweise 0,1 bis 1,0 kg/ha.

In Anbetracht des erfaßbaren Wirkungsspektrums zur Unkrautbekämpfung, der Verträglichkeit der Kulturpflanzen oder der erwünschten Beeinflussung des Wachstums derselben sowie angesichts der Vielfalt der Applikationsmetho den können die erfindungsgemäßen Verbindungen I je nach Substitutionsmuster in einer großen Zahl von Kulturpflanzen eingesetzt werden.

| Botanischer Name | Deutscher Name |
|---|---|
| Allium cepa | Küchenzwiebel |
| Ananas comosus | Ananas |
| Arachis hypogaea | Erdnuß |
| Asparagus officinalis | Spargel |
| Beta vulgaris spp. altissima | Zuckerrübe |
| Beta vulgaris spp. rapa | Futterrübe |
| Beta vulgaris spp. esculenta | Rote Rübe |
| Brassica napus var. napus | Raps |
| Brassica napus var. napobrassica | Kohlrübe |
| Brassica napus var. rapa | Weiße Rübe |
| Brassica rapa var. silvestris | Rübsen |
| Camellia sinensis | Teestrauch |
| Carthamus tinctorius | Saflor - Färberdistel |
| Carya illinoinensis | Pekannußbaum |
| Citrus limon | Zitrone |
| Citrus maxima | Pampelmuse |
| Citrus reticulata | Mandarine |
| Citrus sinensis | Apfelsine, Orange |
| Coffea arabica (Coffea canephora, Coffea liberica) | Kaffee |
| Cucumis melo | Melone |
| Cucumis sativus | Gurke |
| Cynodon dactylon | Bermudagras |
| Daucus carota | Möhre |
| Elaeis guineensis | Ölpalme |
| Fragaria vesca | Erdbeere |
| Glycine max | Sojabohne |
| Gossypium hirsutum (Gossypium arboreum, Gossypium herbaceum, Gossypium vitifolium) | Baumwolle |
| Helianthus annuus | Sonnenblume |
| Helianthus tuberosus | Topinambur |
| Hevea brasiliensis | Parakautschukbaum |
| Hordeum vulgare | Gerste |
| Humulus lupulus | Hopfen |
| Ipomoea batatas | Süßkartoffeln |
| Juglans regia | Walnußbaum |
| Lactua sativa | Kopfsalat |
| Lens culinaris | Linse |
| Linum usitatissimum | Faserlein |
| Lycopersicon lycopersicum | Tomate |

| Botanischer Name | Deutscher Name |
|---|---|
| Malus spp. | Apfel |
| Manihot esculenta | Maniok |
| Medicago sativa | Luzerne |
| Mentha piperita | Pfefferminze |
| Musa spp. | Obst- und Mehlbanane |
| Nicotiana tabacum (N. rustica) | Tabak |
| Olea europaea | Ölbaum |
| Oryza sativa | Reis |
| Phaseolus lunatus | Mondbohne |
| Phaseolus mungo | Erdbohne |
| Phaseolus vulgaris | Buschbohnen |
| Pennisetum glaucum | Perl- oder Rohrkolbenhirse |
| Petroselinum crispum spp. tuberosum | Wurzelpetersilie |
| Picea abies | Rotfichte |
| Abies alba | Weißtanne |
| Pinus spp. | Kiefer |
| Pisum sativum | Gartenerbse |
| Prunus avium | Süßkirsche |
| Prunus domestica | Pflaume |
| Prunus dulcis | Mandelbaum |
| Prunus persica | Pfirsich |
| Pyrus communis | Birne |
| Ribes sylvestre | Rote Johannisbeere |
| Ribes uva-crispa | Stachelbeere |
| Ricinus communis | Rizinus |
| Saccharum officinarum | Zuckerrohr |
| Secale cereale | Roggen |
| Sesamum indicum | Sesam |
| Solanum tuberosum | Kartoffel |
| Spinacia oleracea | Spinat |
| Theobroma cacao | Kakaobaum |
| Trifolium pratense | Rotklee |
| Triticum aestivum | Weizen |
| Vaccinium corymbosum | Kulturheidelbeere |
| Vaccinium vitis-idaea | Preißelbeere |
| Vicia faba | Pferdebohnen |
| Vigna sinensis (V. unguiculata) | Kuhbohne |
| Vitis vinifera | Weinrebe |
| Zea mays | Mais |

Zur Verbreiterung des Wirkungsspektrums und zur Erzielung synergistischer Effekte können die 2,5-substituierten Dihydroresorcinenoletherderivate der Formel I sowohl untereinander als auch mit Vertretern anderer herbizider oder wachstumsregulierender Wirkstoffgruppen gemischt und gemeinsam ausgebracht werden.

Außerdem kann es von Nutzen sein, die 2,5-substituierten Dihydroresorcinenoletherderivate der Formel I bzw. sie enthaltende herbizide Mittel allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs-und Spurenelementmängeln eingesetzt werden. Es können auch nichtphytotoxische Öle und Ölkonzentrate zugesetzt werden.

Herstellungsbeispiele

Beispiele 1 bis 31

Zu 12 mmol der Verbindung der allgemeinen Formel IIa

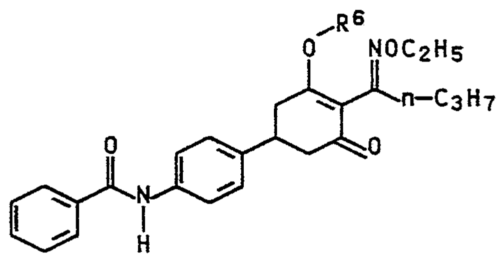

in 100 ml Tetrahydrofuran wurden 12,2 mmol Triethylamin und anschließend 12,2 mmol Säurehalogenid $R^6$-Hal zugesetzt. Nach 12-stündigem Rühren wurde wie üblich aufgearbeitet.

Die Identifizierung und Charakerisierung der Verbindungen I erfolgte mit Hilfe der Protonenresonanzspektroskopie. In der nachstehenden Tabelle 1 sind daher einige strukturspezifische $^1$H-NMR-Daten angegeben (Lösungsmittel $CDCl_3$, interner Standard Tetramethylsilan; s = Singulett, d = Dublett, t = Triplett, q = Quartett, m = Multiplett).

Die Ergebnisse sind in der nachfolgenden Tabelle zusammengestellt.

Tabelle 1

Verbindungen Ia, in denen die Substituenten $R^1$, $R^3$ = H; $R^4$ = n-Propyl; $R^5$ = Ethyl sind:

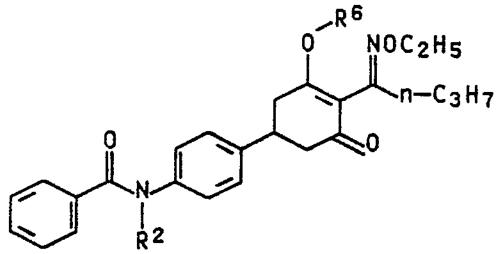

(Ia)

| Bsp. Nr. | Verb. Nr. | $R^2$ | $R^6$ | Charakteristische $^1$H-NMR-Daten (δ) in ppm | Smp. [°C] |
|---|---|---|---|---|---|
| 1 | 1 | H | Acetyl | 0,93 (t); 1,26 (t); 2,18 (s); 4,11 (q); 7,98 (s) | |
| 2 | 5 | H | Butyryl | 0,95 (2t); 1,23 (t); 3,46 (m); 4,11 (q); 8,15 (s) | |
| 3*) | 11 | H | Hexanoyl | 0,92 (m); 1,66 (m); 3,49 (m); 4,14 (q) | 98 |
| 4 | 15 | H | Palmitoyl | 0,90 (t); 0,94 (t); 1,25 (m); 4,13 (q) | |
| 5 | 31 | H | Benzoyl | 0,90 (t); 1,09 (t); 3,56 (m); 3,99 (q) | |
| 6 | 3 | H | Propionyl | 0,95 (t); 4,12 (q); 8,10 (s) | |
| 7 | 109 | $CH_3$ | Methyl | 3,48 (s); 3,78 (s); 4,16 (q) | 46-48 |
| 8 | 110 | H | Methyl | 1,17 (t); 3,58 (s); 4,12 (q) | |
| 9 | 111 | H | 2-Methyl-propanoyl | 0,93 (t); 4,12 (q); 8,22 (s) | |
| 10 | 112 | H | 2,2-Di-methylpro-panoyl | 1,26 (s); 4,12 (q); 8,28 (s) | |
| 11 | 113 | H | 2-Methyl-pentanoyl | 0,92 (t); 4,11 (q); 8,35 (s) | |
| 12 | 114 | H | 4-Methyl-pentanoyl | 1,01 (d); 4,13 (q); 8,27 (s) | |
| 13 | 115 | H | 3-Chlorpro-panoyl | 0,98 (t); 4,12 (q); 7,84 (d) | |
| 14 | 116 | H | Dichlor-acetyl | 0,97 (t); 4,11 (q); 7,86 (d) | |
| 15 | 117 | H | Trichlor-acetyl | 0,98 (t); 2,96 (t); 4,10 (q) | |
| 16 | 118 | H | 2,2-Di-chlor-pro-panoyl | 2,32 (s); 4,10 (q); 7,83 (d) | |
| 17 | 119 | H | Crotonoyl | 1,92 (d); 4,10 (q); 5,89 (d) | |
| 18 | 120 | H | 3-Methyl-crotonoyl | 1,96 (s); 2,17 (s); 5,72 (s) | |

*) Ber.: C 71,79 H 7,38 N 5,40
Gef.: C 71,0 H 7,5 N 5,2

Tabelle 2

Verbindungen Ib, in denen die Substituenten $R^1$, $R^2$ = H sind:

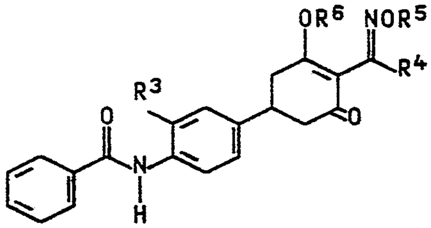

(Ib)

| Bsp. Nr. | Verb. Nr. | $R^3$ | $R^4$ | $R^5$ | $R^6$ | Charakteristische $^1$H-NMR-Daten (δ) in ppm | Smp [°C] |
|---|---|---|---|---|---|---|---|
| 19 | 71 | F | n-$C_3H_7$ | $C_2H_5$ | Acetyl | | 127-129 |
| 20 | 80 | F | n-$C_3H_7$ | $C_2H_5$ | Benzoyl | | 177-179 |
| 21 | 83 | $CH_3$ | n-$C_3H_7$ | $C_2H_5$ | Acetyl | | 138 |
| 22 | 84 | $CH_3$ | n-$C_3H_7$ | $C_2H_5$ | Butyryl | | 91-93 |
| 23 | 121 | F | n-$C_3H_7$ | $C_2H_5$ | Butyryl | | 116-118 |
| 24 | 122 | F | n-$C_3H_7$ | (E)-$CH_2$-CH=CH-Cl | Acetyl | | 113-114 |
| 25 | 123 | F | n-$C_3H_7$ | (E)-$CH_2$-CH=CH-Cl | Propionyl | | 92-95 |
| 26 | 124 | F | n-$C_3H_7$ | (E)-$CH_2$-CH=CH-Cl | Benzoyl | | 143-145 |
| 27 | 125 | $CH_3$ | n-$C_3H_7$ | (E)-$CH_2$-CH=CH-Cl | Butyryl | 2,4-2,6 (m); 7,75 (s) | |
| 28 | 126 | $CH_3$ | n-$C_3H_7$ | (E)-$CH_2$-CH=CH-Cl | Acetyl | 2,20 (s); 2,35 (s); 4,60 (d) | |
| 29 | 127 | $CH_3$ | n-$C_3H_7$ | $C_2H_5$ | Benzoyl | | 138-140 |
| 30 | 128 | $CH_3$ | n-$C_3H_7$ | (E)-$CH_2$-CH=CH-Cl | Benzoyl | 0,98 (t); 2,40 (s); 4,40 (d) | |
| 31 | 129 | $CH_3O$ | n-$C_3H_7$ | $C_2H_5$ | Butyryl | 1,25 (t); 3,95 (s); 4,12 (q) | |

Anwendungsbeispiele

Die Wirkung der 2,5-substituierten Dihydroresocinenoletherderivate der Formel I auf das Wachstum der Testpflanzen ließ sich durch die folgenden Gewächshausversuche zeigen.

Als Kulturgefäße dienten Plastikblumentöpfe mit 300 cm³ und lehmigem Sand mit etwa 3,0 % Humus als Substrat. Die Samen der Testpflanzen wurden nach Arten getrennt flach eingesät.

Bei Vorauflaufbehandlung wurden die aufbereiteten Wirkstoffe unmittelbar danach auf die Erdoberfläche aufgebracht. Sie wurden hierbei in Wasser als Verteilungsmittel suspendiert oder emulgiert und mittels fein verteilender Düsen gespritzt. Nach dem Aufbringen der Mittel wurden die Gefäße leicht beregnet, um Keimung und Wachstum in Gang zu bringen. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die Wirkstoffe beeinträchtigt wurde. Die Aufwandmengen betrugen 3,0 kg/ha.

Zum Zwecke der Nachauflaufbehandlung zog man die Testpflanzen je nach Wuchsform erst bis zu einer Wuchshöhe von 3 bis 15 cm an und behandelte sie danach. Zur Nachauflaufbehandlung wurden entweder direkt gesäte und in den gleichen Gefäßen aufgewachsene oder erst als Keimpflanzen getrennt angezogene und einige Tage vor der Behandlung in die Versuchsgefäße verpflanzte Pflanzen ausgewählt. Die Aufwandmengen für die Nachauflaufbehandlung betrugen 0,125 bis 0,5 kg Wirkstoff/ha. Eine Abdeckung unterblieb bei der Nachauflaufbehandlung.

Die Versuchsgefäße wurden im Gewächshaus aufgestellt, wobei für wärmeliebende Arten wärmere Bereiche (20 bis 35°C) und für solche gemäßigter Klimate 10 bis 20°C bevorzugt wurden. Die Versuchsperiode erstreckte sich über 2 bis 4 Wochen. Während dieser Zeit wurden die Pflanzen gepflegt und ihre Reaktion auf die einzelnen Behandlungen ausgewertet.

Die in den Gewächshausversuchen verwendeten Pflanzen setzten sich aus folgenden Arten zusammen:

| Lateinischer Name | Deutscher Name |
|---|---|
| Alopecurus myosuroides | Ackerfuchsschwanz |
| Avena sativa | Hafer |
| Digitaria sanguinalis | Blutfingerhirse |
| Lolium multiflorum | Ital. Raygras |
| Medicago sativa | Luzerne |
| Setaria italica | Kolbenhirse |
| Sinapis alba | Weißer Senf |
| Triticum aestivum | Weizen |

Mit den Wirkstoffen 1, 5, 11 und 31 ließen sich Gräser aus der Familie der Gramineen im Vorauflaufverfahren mit 3,0 kg Wirkstoff/ha gut bekämpfen. Sinapis alba als dikotyles Pflanzenbeispiel blieb unbeeinträchtigt.

Im Nachauflaufverfahren eigneten sich die Verbindungen 1, 5, 11, 15 und 31 zur Bekämpfung unerwünschter grasartiger Vegetation mit Aufwandmengen von 0,25 bis 0,5 kg Wirkstoff/ha. Luzerne als dikotyle Kulturpflanze erlitt keinerlei Schädigung.

Die Verbindungen 1, 15 und 31 ließen sich als selektive Herbizide in Gramineenkulturen einsetzen. Mit 0,125 bis 0,25 kg Wirkstoff/ha wurde im Nachauflaufverfahren beispielsweise Setaria italica gut bekämpft, wobei Weizen nicht oder nur unwesentlich beeinträchtigt wurde.

Die Verbindung 5 eignete sich gut zur Bekämpfung grasartiger Pflanzen wie Digitaria sanguinalis, Echinochloa crus-galli und Setaria faberii im Nachauflaufverfahren. Reis als Beispielpflanze für Gramineenkulturen wurde dabei nur unwesentlich beeinträchtigt.

## Ansprüche

1. 2,5-substituierte Dihydroresorcinenoletherderivate der allgemeinen Formel I

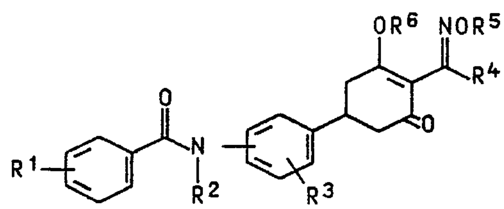

(I)

in der die Substituenten folgende Bedeutung haben

$R^1$ Wasserstoff, $C_1$-$C_4$-Alkyl, $C_1$-$C_4$-Alkoxy, $C_1$-$C_4$-Halogenalkyl, Halogen oder Nitro,

$R^2$ Wasserstoff, $C_1$-$C_4$-Alkyl oder $C_2$-$C_4$-Alkenyl,

$R^3$ Wasserstoff, $C_1$-$C_4$-Alkyl, $C_1$-$C_4$-Alkoxy, $C_1$-$C_4$-Alkylthio, $C_2$-$C_4$-Alkenyl, $C_2$-$C_4$-Alkenyloxy, $C_2$-$C_4$-Alkinyl, $C_2$-$C_4$-Alkinyloxy, Halogen, $C_1$-$C_4$-Halogenalkyl, Hydroxy, Nitro oder Amino,

$R^4$ $C_1$-$C_4$-Alkyl,

$R^5$ $C_1$-$C_4$-Alkyl, $C_1$-$C_4$-Halogenalkyl, $C_2$-$C_4$-Alkenyl oder $C_2$-$C_4$-Halogenalkenyl,
$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituiertem Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl.

2. 2,5-substituierte Dihydroresorcinenoletherderivate der Formel I nach Anspruch 1, in der
$R^1$ Wasserstoff, $C_1$-$C_4$-Alkyl, Methoxy, $C_1$-$C_4$-Halogenalkyl, Halogen oder Nitro,
$R^2$ Wasserstoff, $C_1$-$C_4$-Alkyl, $C_2$-$C_4$-Alkenyl,
$R^3$ Wasserstoff, $C_1$-$C_4$-Alkyl, $C_1$-$C_4$-Alkoxy, $C_2$-$C_4$-Alkenyl, Halogen, $C_1$-$C_4$-Halogenalkyl, Hydroxy, Nitro oder Amino,
$R^4$ $C_1$-$C_4$-Alkyl,
$R^5$ $C_1$-$C_4$-Alkyl, $C_1$-$C_4$-Halogenalkyl, $C_2$-$C_4$-Alkenyl oder $C_2$-$C_4$-Halogenalkenyl,
$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituiertem Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl bedeuten.

3. 2,5-substituierte Dihydroresorcinenoletherderivate der Formel I nach Anspruch 1, in der
$R^1$ Wasserstoff, $C_1$-$C_3$-Alkyl, Methoxy, Trifluormethyl, Fluor, Chlor oder Nitro,
$R^2$ Wasserstoff, $C_1$-$C_3$-Alkyl, Allyl,
$R^3$ Wasserstoff, $C_1$-$C_2$-Alkyl, $C_1$-$C_2$-Alkoxy, $C_3$-$C_4$-Alkenyl, Fluor, Chlor, Trifluormethyl, Hydroxy, Nitro oder Amino,
$R^4$ Ethyl, Propyl,
$R^5$ $C_1$-$C_3$-Alkyl, $C_3$-$C_4$-Alkenyl, 2-Fluorethyl, 2-Chlorethyl, 3-Chlor-prop-2-en-1-yl,
$R^6$ Methyl, Ethyl, Propyl, Butyl, Hexyl und Octyl, Formyl, Acetyl, Propionyl, Butyryl, Valeryl, Pivaloyl, Lauroyl, Palmitoyl, Stearoyl, Methacryloyl, Crotonoyl, Oleoyl, Methoxyacetyl, Ethoxyacetyl, Chloracetyl, Trifluoracetyl, Cyclopropylcarbonyl, Cyclopentylcarbonyl, Cyclohexylcarbonyl, Benzoyl, 2-Chlorbenzoyl, 2-Fluorbenzoyl und 4-Methoxybenzoyl, Methoxycarbonyl, Ethoxycarbonyl und Propoxycarbonyl, Methyl-und Ethylthiocarbonyl, Methyl-, Ethyl-, Propyl-, Butyl-, Hexyl-und Octylsulfonyl, Dimethoxy-, Diethoxy-, Methoxyethoxy-und Dipropoxyphosphoryl bedeuten.

4. 2,5-substituierte Dihydroresorcinenoletherderivate der Formel I nach Anspruch 1, in der
$R^1$ Wasserstoff,
$R^2$ Wasserstoff, $C_1$-$C_2$-Alkyl,
$R^3$ Wasserstoff, Methyl, Methoxy, Fluor, Chlor oder Hydroxy,
$R^4$ Ethyl, Propyl,
$R^5$ Ethyl, But-2-en-1-yl, 3-Chlor-prop-2-en-1-yl,
$R^6$ Acetyl, Propionyl, Butyryl, Valeroyl, Pivaloyl, Hexanoyl, Stearoyl, Palmitoyl, Oleoyl, Methoxyacetyl, Methoxythioacetyl, Chloracetyl, Bromacetyl, Cyclopropylcarbonyl, Cyclohexylcarbonyl, Benzoyl, 2-Methylbenzoyl, 4-Chlorbenzoyl, 3-Methoxybenzoyl, 4-Nitrobenzoyl, Methoxycarbonyl, Methylthiocarbonyl, Methylsulfonyl, Ethylsulfonyl, Diethoxyphosphoryl, Methyl, Ethyl, n-Octyl, Allyl, 2-Methylpropanoyl, 2,2-Dimethylpropanoyl, 2-und 4-Methylpentanoyl, 3-Chlorpropanoyl, Dichloracetyl, Trichloracetyl, 2,2-Dichlorpropanoyl, Crotonoyl oder 3-Methylcrotonoyl bedeuten.

5. 2,5-substituierte Dihydroresorcinenoletherderivate der Formel I nach Anspruch 1, in der
$R^1$, $R^2$, $R^3$ Wasserstoff,
$R^4$ Ethyl oder n-Propyl,
$R^5$ Ethyl und
$R^6$ Acetyl, Propionyl oder Butyryl bedeuten.

6. Verfahren zur Herstellung der 2,5-substituieren Dihydroresorcinenoletherderivate I gemäß Anspruch 1, dadurch gekennzeichnet, daß man ein substituiertes 2,5-Dihydroresorcinenol der Formel II

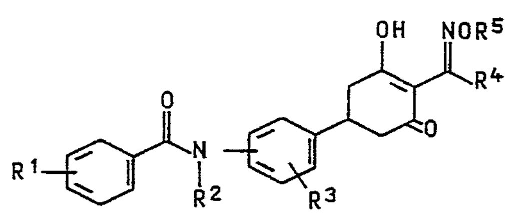

(II)

oder deren Salze in an sich bekannter Weise mit einer Verbindung $R^6$-Hal umsetzt.

7. Herbizid, enthaltend ein 2,5-substituiertes Dihydroresocinenoletherderivat I gemäß Anspruch 1.

8. Herbizid, enthaltend inerte Zusatzstoffe und ein 2,5-substituiertes Dihydroresorcinenoletherderivat I gemäß Anspruch 1.

9. Herbizid nach Anspruch 8, dadurch gekennzeichnet , daß es 0,1 bis 95 Gew.% des 2,5-substituierten Dihydroresocinenoletherderivates I gemäß Anspruch 1 enthält.

10. Verfahren zur Bekämpfung unerwünschten Pflanzenwuchses, dadurch gekennzeichnet, daß man die unerwünschten Pflanzen und/oder die von unerwünschtem Pflanzenwachstum freizuhaltenden Flächen mit einer herbizid wirksamen Menge eines 2,5-substituierten Dihydroresorcinenoletherderivats I gemäß Anspruch 1 behandelt.

Patentansprüche für folgenden Vertragsstaat : ES

1. Verfahren zur Herstellung der 2-5-substituierte Dihydrorescorcinenoletherderivate der allgemeinen Formel I

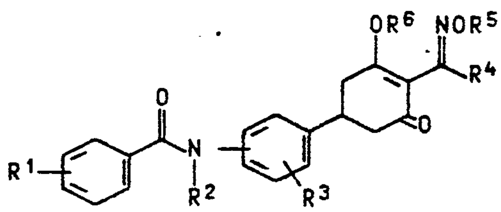

(I)

in der die Substituenten

$R^1$ Wasserstoff, $C_1$-$C_4$-Alkyl, $C_1$-$C_4$-Alkoxy, $C_1$-$C_4$-Halogenalkyl, Halogen oder Nitro,

$R^2$ Wasserstoff, $C_1$-$C_4$-Alkyl oder $C_2$-$C_4$-Alkenyl,

$R^3$ Wasserstoff, $C_1$-$C_4$-Alkyl, $C_1$-$C_4$-Alkoxy, $C_1$-$C_4$-Alkylthio, $C_2$-$C_4$-Alkenyl, $C_2$-$C_4$-Alkenyloxy, $C_2$-$C_4$-Alkinyl, $C_2$-$C_4$-Alkinyloxy, Halogen, $C_1$-$C_4$-Halogenalkyl, Hydroxy, Nitro oder Amino,

$R^4$ $C_1$-$C_4$-Alkyl,

$R^5$ $C_1$-$C_4$-Alkyl, $C_1$-$C_4$-Halogenalkyl, $C_2$-$C_4$-Alkenyl oder $C_2$-$C_4$-Halogenalkenyl,

$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituiertem Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl bedeuten, dadurch gekennzeichnet, daß man ein substituiertes 2,5-Dihydroresorcinenol der Formel II

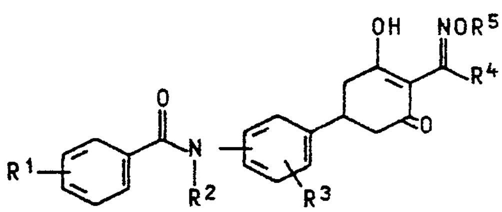

(II)

oder deren Salze in an sich bekannter Weise mit einer Verbindung $R^6$-Hal umsetzt.

2. Verfahren zur Herstellung der 2,5-substituierten Dihydroresorcinenoletherderivate I nach Anspruch 1, in der

$R^1$ Wasserstoff, $C_1$-$C_4$-Alkyl, Methoxy, $C_1$-$C_4$-Halogenalkyl, Halogen oder Nitro,

$R^2$ Wasserstoff, $C_1$-$C_4$-Alkyl, $C_2$-$C_4$-Alkenyl,

$R^3$ Wasserstoff, $C_1$-$C_4$-Alkyl, $C_1$-$C_4$-Alkoxy, $C_2$-$C_4$-Alkenyl, Halogen, $C_1$-$C_4$-Halogenalkyl, Hydroxy, Nitro oder Amino,

$R^4$ $C_1$-$C_4$-Alkyl,

$R^5$ $C_1$-$C_4$-Alkyl, $C_1$-$C_4$-Halogenalkyl, $C_2$-$C_4$-Alkenyl oder $C_2$-$C_4$-Halogenalkenyl,

$R^6$ $C_1$-$C_8$-Alkyl, $C_1$-$C_{20}$-Acyl mit aliphatischem, cycloaliphatischem oder aromatischem gegebenenfalls durch $C_1$-$C_4$-Alkyl, $C_1$-$C_4$-Alkoxy, $C_1$-$C_4$-Alkylthio, Halogen oder Nitro substituiertem Rest, $C_2$-$C_8$-Alkoxycarbonyl, $C_2$-$C_8$-Alkylthiocarbonyl, $C_1$-$C_8$-Alkylsulfonyl oder $C_2$-$C_8$-Dialkoxyphosphoryl bedeuten.

3. Verfahren zur Herstellung der 2,5-substituierten Dihydroresorcinenoletherderivate der Formel I nach Anspruch 1, in der

$R^1$ Wasserstoff, $C_1$-$C_3$-Alkyl, Methoxy, Trifluormethyl, Fluor, Chlor oder Nitro,

$R^2$ Wasserstoff, $C_1$-$C_3$-Alkyl, Allyl,

$R^3$ Wasserstoff, $C_1$-$C_2$-Alkyl, $C_1$-$C_2$-Alkoxy, $C_3$-$C_4$-Alkenyl, Fluor, Chlor, Trifluormethyl, Hydroxy, Nitro oder Amino,
$R^4$ Ethyl, Propyl,
$R^5$ $C_1$-$C_3$-Alkyl, $C_3$-$C_4$-Alkenyl, 2-Fluorethyl, 2-Chlorethyl, 3-Chlor-prop-2-en-1-yl,
$R^6$ Methyl, Ethyl, Propyl, Butyl, Hexyl und Octyl, Formyl, Acetyl, Propionyl, Butyryl, Valeryl, Pivaloyl, Lauroyl, Palmitoyl, Stearoyl, Methacryloyl, Crotonoyl, Oleoyl, Methoxyacetyl, Ethoxyacetyl, Chloracetyl, Trifluoracetyl, Cyclopropylcarbonyl, Cyclopentylcarbonyl, Cyclohexylcarbonyl, Benzoyl, 2-Chlorbenzoyl, 2-Fluorbenzoyl und 4-Methoxybenzoyl, Methoxycarbonyl, Ethoxycarbonyl und Propoxycarbonyl, Methyl-und Ethylthiocarbonyl, Methyl-, Ethyl-, Propyl-, Butyl-, Hexyl-und Octylsulfonyl, Dimethoxy-, Diethoxy-, Methoxy-ethoxy-und Dipropoxyphosphoryl bedeuten.

4. Verfahren zur Herstellung der 2,5-substituierten Dihydroresorcinenoletherderivate der Formel I nach Anspruch 1, in der
$R^1$ Wasserstoff,
$R^2$ Wasserstoff, $C_1$-$C_2$-Alkyl,
$R^3$ Wasserstoff, Methyl, Methoxy, Fluor, Chlor oder Hydroxy,
$R^4$ Ethyl, Propyl,
$R^5$ Ethyl, But-2-en-1-yl, 3-Chlor-prop-2-en-1-yl,
$R^6$ Acetyl, Propionyl, Butyryl, Valeroyl, Pivaloyl, Hexanoyl, Stearoyl, Palmitoyl, Oleoyl, Methoxyacetyl, Methoxythioacetyl, Chloracetyl, Bromacetyl, Cyclopropylcarbonyl, Cyclohexylcarbonyl, Benzoyl, 2-Methylbenzoyl, 4-Chlorbenzoyl, 3-Methoxybenzoyl, 4-Nitrobenzoyl, Methoxycarbonyl, Methylthiocarbonyl, Methylsulfonyl, Ethylsulfonyl, Diethoxyphosphoryl, Methyl, Ethyl, n-Octyl, Allyl, 2-Methylpropanoyl, 2,2-Dimethylpropanoyl, 2-und 4-Methylpentanoyl, 3-Chlorpropanoyl, Dichloracetyl, Trichloracetyl, 2,2-Dichlorpropanoyl, Crotonoyl oder 3-Methylcrotonoyl bedeuten.

5. Verfahren zur Herstellung der 2,5-substituierten Dihydroresorcinenoletherderivate der Formel I nach Anspruch 1, in der
$R^1$,$R^2$, $R^3$ Wasserstoff,
$R^4$ Ethyl oder n-Propyl,
$R^5$ Ethyl und
$R^6$ Acetyl, Propionyl oder Butyryl bedeuten.

6. Herbizid, enthaltend ein 2,5-substituiertes Dihydroresocinenoletherderivat I gemäß Anspruch 1.

7. Herbizid, enthaltend inerte Zusatzstoffe und ein 2,5-substituiertes Dihydroresorcinenoletherderivat I gemäß Anspruch 1.

8. Herbizid nach Anspruch 7, dadurch gekennzeichnet, daß es 0,1 bis 95 Gew.% des 2,5-substituierten Dihydroresocinenoletherderivates I gemäß Anspruch 1 enthält.

9. Verfahren zur Bekämpfung unerwünschten Pflanzenwuchses, dadurch gekennzeichnet, daß man die unerwünschten Pflanzen und/oder die von unerwünschtem Pflanzenwachstum freizuhaltenden Flächen mit einer herbizid wirksamen Menge eines 2,5-substituierten Dihydroresorcinenoletherderivats I gemäß Anspruch 1 behandelt.

Europäisches Patentamt

# EUROPÄISCHER RECHERCHENBERICHT

Nummer der Anmeldung: EP 87104553.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | EP - A2 - 0 085 529 (ICI AUSTRALIA)<br>* Ansprüche 1-3,16-18,20 * | 1-10 | C 07 C 131/00<br>A 01 N 37/22 |
| P,A | EP - A2 - 0 209 283 (ICI AUSTRALIA)<br>* Ansprüche 1,8,9,12 * | 1,6,7,10 | |
| A | EP - A1 - 0 133 349 (ICI AUSTRALIA)<br>* Ansprüche 1,11,12,15 * | 1,6,7,10 | |
| A | EP - A2 - 0 169 521 (BASF)<br>* Zusammenfassung * | 1,6,7,10 | |
| D,A | & DE-A1-3 433 767 | | |
| A | EP - A2 - 0 136 703 (BASF)<br>* Zusammenfassung * | 1,6,7,10 | RECHERCHIERTE SACHGEBIETE (Int. Cl.4) |
| D,A | & DE-A1-3 336 354 | | C 07 C 131/00 |

Der vorliegende Recherchenbericht wurde für alle Patentansprüche erstellt.

| Recherchenort | Abschlußdatum der Recherche | Prüfer |
|---|---|---|
| WIEN | 12-06-1987 | REIF |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82